# EUROPEAN PATENT SPECIFICATION

(11) **EP 0 516 242 B1**
(45) Date of publication and mention of the grant of the patent: **06.09.1995**
(21) Application number: 92201524.3
(22) Date of filing: 29.05.1992
(51) Int. Cl.: G01F 23/64, G01F 23/66, G01F 23/52, G01F 23/48

(54) **Resistor-operated tubular rotary level indicator of float-type**
Mit einem Widerstand versehener, schlauchförmiger, rotierender Niveauanzeiger nach Art eines Schwimmers
Indicateur du niveau tubulaire, rotatif, à résistance, du type flotteur

(30) Priority: 30.05.1991 IT MI910473 U
(43) Date of publication of application: 02.12.1992
(73) Proprietor: BITRON S.p.A., 10060 Cantalupa (TO) (IT)
(72) Inventor: Bianco, Giovanni, I-17045 Legino (Savona) (IT)
(74) Representative: Fusina, Gerolamo

(56) References cited:
- CH-A- 440 739
- DE-C- 545 660
- FR-A- 2 626 071
- GB-A- 580 699

## Description

This invention relates to a resistor-operated tubular rotary level indicator of float-type.

Currently known tubular level indicators of float-type, in particular fuel level indicators fitted to motor vehicles, are divided essentially into two categories, namely a first direct reading category in which a float, moved by a constant hydraulic thrust, shifts a contact which slides along a resistor of length equal to the total reading range, and a second reduced-reading category in which the float is equal in length to the total reading range but is of reduced travel, it being subjected to a hydrostatic thrust which varies in accordance with the level and is compensated by the action of two counteracting springs.

Such apparatus have various drawbacks, the former being penalized by a contact force which is necessarily weak in order not to hinder the float movement by excessive friction, whereas the latter, of more recent origin, are penalized by the need to calibrate the spring position to obtain correct correspondence with the required resistance values.

FR-A-2626071 relates to an indicator device according to the preamble of claim 1.

CH-A-440739 discloses an indicator device having two guides for the float which is provided with a rectangular aperture driving the rotation of a helical rod.

GB-A-580699 shows a liquid level indicator in which the float carries two pairs of disc rollers.

An object of the present invention is to provide a resistor-operated tubular rotary level indicator of float-type which simultaneously provides a constant reliable indication of the level of the fuel or other liquid contained in the tank when this latter is subjected to external stresses which cause it to vary its inclination, and a rapid and likewise reliable indication of the level during tank filling.

A further object of the invention is to obviate the aforesaid drawbacks by a simple, low-cost construction.

These objects are attained according to the present invention by a resistor-operated tubular rotary level indicator of float-type according to claim 1 and claim 2.

The structural and operational characteristics and the advantages of a tubular level indicator of float-type according to the present invention will be more apparent from the description given hereinafter by way of non-limiting example with reference to the accompanying schematic drawings, in which:

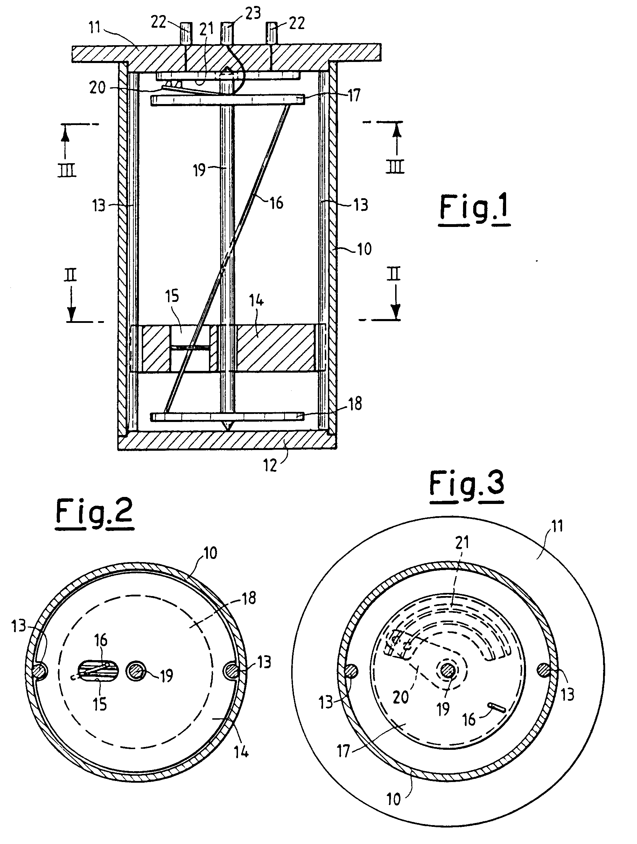

Figure 1 is an elevational section through a level indicator in accordance with the present invention;
Figure 2 is a section on the line II-II of Figure 1, showing the connection between the guides and the float and between the float and the rotation rod; and
Figure 3 is a section on the line III-III of Figure 1, showing the position and form of the resistor installed on the upper cover.

With reference to the figures, a resistor-operated tubular rotary level indicator of float-type according to the present invention comprises essentially a tubular casing 10, conveniently holed to allow passage of the fuel or other liquid and bounded at its ends by two plastics disc-like covers 11 and 12. Inside said tubular casing there are provided two guide columns 13 on which there slides a float 14, provided with a radial slot 15 within which a rod element 16 is engaged. The rod element 16 is connected at its ends to two discs 17 and 18 which together with a central vertical shaft 19 perpendicular to them forms a rotary moving element. The disc 17 carries on its upper surface a blade contact 20 connected to earth at 23 and slidable along a resistor 21 directly connected to external contact lugs 22. Vertical movement of the float, variable in accordance with the level of the fuel contained in the tank and hence within the tubular casing, causes the rod element 16 engaged within said float 14 via said slot 15 to move, said rod element then rotating the moving element with consequent shifting of the contact along the resistor. In the illustrated embodiment the angular travel of the contact is about 70°. In an alternative embodiment the rod element 16 is of helical configuration and passes through a hole provided in the float 14 instead of the radial slot 15.

The described apparatus has the advantage of reducing the travel along the resistor with the consequent ability to accept a greater contact pressure for an equal level of friction acting on the float. Moreover the unique mechanical linkage between the float and contact means that no spring calibration is required. In addition, compared with the type comprising springs, the invention has the advantage of eliminating contact difficulties between the springs and other metal parts, this contact being a problem if possible oxidized surfaces are present seeing that the contact pressure available is very low. A further advantage over current types is that the resistor is always above the level of the fuel or liquid contained in the tank and hence is not wetted, apart from the inevitable splashing due to the shaking within the tank.

A further advantage of the invention is that it is standardized in the sense of being suitable for any type of liquid, because in the case of reduced-reading indicators the hydrostatic thrust varies with varying specific gravity of the liquid of which the level is to be measured.

Finally, a further advantage of the invention is that it overcomes the spring calibration problem, which on a mass production scale is clearly onerous, and provides an apparatus which is of simple and relatively low-cost construction.

## Claims

1. A resistor-operated tubular rotary level indicator of float-type consisting of a cylindrical casing (10), in the interior of which there is provided at least one fixed guide (13) on which a float (14) slides vertically, and a rotary moving element (17,18,19) supporting a contact (20) which moves along a resistor (21) installed on a top cover (11) of said cylindrical casing (10), a linkage (15,16) being interposed between said vertically slidable float (14) and said rotary moving element (17,18,19), characterised in that said resistor (21) is directly connected to external contact lugs (22) connectable to a display unit, in that there are provided two said fixed guides (13), and in that said linkage consists of a rod element (16) slidingly inserted within a slot (15) in said float (14), said rotary moving element comprising two metal discs (17,18) connected together by a central shaft (19) which acts as the rotation shaft and has its ends rotatably contained in relative seats provided in the opposing covers (11,12) of said cylindrical casing (10), said rod element (16) being secured at its ends to non-facing portions of said two discs (17,18).

2. A resistor-operated tubular rotary level indicator of float-type consisting of a cylindrical casing (10), in the interior of which there is provided at least one fixed guide (13) on which a float (14) slides vertically, and a rotary moving element (17,18,19) supporting a contact (20) which moves along a resistor (21) installed on a top cover (11) of said cylindrical casing (10), a linkage (15,16) being interposed between said vertically slidable float (14) and said rotary moving element (17,18,19), characterised in that said resistor (21) is directly connected to external contact lugs (22) connectable to a display unit, in that there are provided two said fixed guides (13), and in that said linkage consists of a helical element (16) slidingly inserted within a hole (15) in said float (14), said rotary moving element comprising two metal discs (17,18) connected together by a central shaft (19) which acts as the rotation shaft and has its ends rotatably contained in relative seats provided in the opposing covers (11,12) of said cylindrical casing (10), said helical element (16) being secured at its ends to said two discs (17,18).

3. An indicator as claimed in claim 1 or 2, characterised in that said cylindrical casing (10) is closed at its ends by two shaped discs (11,12).

4. An indicator as claimed in claim 1 or 2, characterised in that the angular travel of the contact rigid (20) with the rotary moving element (17,18,19) is about 70°.

## Revendications

1. Indicateur de niveau rotatif tubulaire, à résistance, du type flotteur, constitué d'un carter cylindrique (10), à l'intérieur duquel est prévu au moins un guide fixe (13) sur lequel un flotteur (14) coulisse verticalement, et d'un élément à mouvement rotatif (17, 18, 19) portant un contact (20) qui se déplace le long d'une résistance (21) montée sur un capuchon (11) du carter cylindrique (10), un système de liaison (15, 16) étant monté entre le flotteur (14) coulissant verticalement et l'élément à mouvement rotatif (17, 18, 19), caractérisé en ce que la résistance (21) est directement reliée à des pattes de contact (22) externes susceptible d'être connectées avec une unité d'affichage, en ce que sont prévus les deux guides fixes (13), et en ce que la liaison est constituée par une tige (16) insérée de façon coulissante à l'intérieur d'une fente (15) ménagée dans le flotteur (14), l'élément à mouvement rotatif comprenant deux disques en métal (17, 18) reliés par une tige centrale (19) qui sert d'axe de rotation et dont les extrémités sont logées de façon rotative à l'intérieur de sièges relatifs prévus dans les capuchons opposés (11, 12) du carter cylindrique (10), la tige (16) étant fixée, à ses extrémités, à des parties des deux disques (17, 18) non situées en face l'une de l'autre.

2. Indicateur de niveau rotatif tubulaire, à résistance, du type flotteur, constitué d'un carter cylindrique (10), à l'intérieur duquel est prévu au moins un guide fixe (13) sur lequel un flotteur (14) coulisse verticalement, et d'un élément à mouvement rotatif (17, 18, 19) portant un contact (20) qui se déplace le long d'une résistance (21) montée sur un capuchon (11) du carter cylindrique (10), un système de liaison (15, 16) étant monté entre le flotteur (14) coulissant verticalement et l'élément à mouvement rotatif (17, 18, 19), caractérisé en ce que la résistance (21) est directement reliée à des pattes de contact (22) externes susceptible d'être connectées avec une unité d'affichage, en ce que sont prévus les deux guides fixes (13), et en ce que la liaison est constituée par un élément hélicoïdal (16) inséré de façon coulissante à l'intérieur d'une fente (15) ménagée dans le flotteur (14), l'élément à mouvement rotatif comprenant deux disques en métal (17, 18) reliés par une tige centrale (19) qui sert d'axe de rotation et dont les extrémités sont logées de façon rotative à l'intérieur de sièges relatifs prévus dans les capuchons opposés (11, 12) du carter cylindrique (10), l'élément hélicoïdal (16) étant fixé, à ses extrémités, aux deux disques (17, 18).

3. Indicateur selon la revendication 1 ou 2, caractérisé en ce que le carter cylindrique (10) est fermé, à ses extrémités, par deux disques façonnés (11, 12).

4. Indicateur selon la revendication 1 ou 2, caractérisé en ce que le déplacement angulaire du contact (20) qui est solidaire de l'élément à mouvement rotatif (17, 18, 19) est d'environ 70°.

## Patentansprüche

1. Widerstandbetriebener rohrförmiger, umlaufender Niveauanzeiger vom Schwimmertyp, sich zusammensetzend aus einem zylindrischen Gehäuse (10), in dessen Innerem wenigstens eine ortsfeste Führung (13) vorgesehen ist, auf welcher ein Schwimmer (14) vertikal gleitet, und einem sich drehend bewegenden Element (17, 18, 19), das einen Kontakt (20) trägt, der sich längs eines Widerstands (21) bewegt, welcher auf einer oberen Abdeckung (11) des zylindrischen Gehäuses (10) installiert ist, einer Verbindung (15, 16), die zwischen den vertikal verschiebbaren Schwimmer (14) und das sich drehend bewegende Element (17, 18, 19) zwischengefügt ist, dadurch **gekennzeichnet**, daß der Widerstand (21) direkt mit externen Kontaktfahnen bzw. -ansätzen (22) verbunden ist, die mit einer Displayeinheit verbindbar sind, daß zwei der ortsfesten Führungen (13) vorgesehen sind, und daß sich die Verbindung zusammensetzt aus einem Stabelement (16), das verschiebbar in einen Schlitz (15) in dem Schwimmer (14) eingefügt ist, wobei das sich drehend bewegende Element zwei Metallscheiben (17, 18) umfaßt, die durch einen mittigen Schaft (19) miteinander verbunden sind, welcher als der Drehschaft wirkt und dessen Enden drehbar in jeweiligen Sitzen enthalten sind, die in den gegenüberliegenden Abdeckungen (11, 12) des zylindrischen Gehäuses (10) vorgesehen sind, wobei das Stabelement (16) an seinen Enden an nichtgegenüberliegenden Teilen der beiden Scheiben (17, 18) befestigt ist.

2. Widerstandbetriebener rohrförmiger, umlaufender Niveauanzeiger vom Schwimmertyp, sich zusammensetzend aus einem zylindrischen Gehäuse (10), in dessen Innerem wenigstens eine ortsfeste Führung (13) vorgesehen ist, auf welcher ein Schwimmer (14) vertikal gleitet, und einem sich drehend bewegenden Element (17, 18, 19), das einen Kontakt (20) trägt, der sich längs eines Widerstands (21) bewegt, welcher auf einer oberen Abdeckung (11) des zylindrischen Gehäuses (10) installiert ist, einer Verbindung (15, 16), die zwischen den vertikal verschiebbaren Schwimmer (14) und das sich drehend bewegende Element (17, 18, 19) zwischengefügt ist, dadurch **gekennzeichnet** , daß der Widerstand (21) direkt mit externen Kontaktfahnen bzw. -ansätzen (22) verbunden ist, die mit einer Displayeinheit verbindbar sind, daß zwei der ortsfesten Führungen (13) vorgesehen sind, und daß sich die Verbindung zusammensetzt aus einem spiralförmigen Element (16), das verschiebbar in ein Loch (15) in dem Schwimmer (14) eingefügt ist, wobei das sich drehend bewegende Element zwei Metallscheiben (17, 18) umfaßt, die durch einen mittigen Schaft (19) miteinander verbunden sind, welcher als der Drehschaft wirkt und dessen Enden drehbar in jeweiligen Sitzen enthalten sind, die in den gegenüberliegenden Abdeckungen (11, 12) des zylindrischen Gehäuses (10) vorgesehen sind, wobei das spiralförmige Element (16) an seinen Enden an den beiden Scheiben (17, 18) befestigt ist.

3. Anzeiger nach Anspruch 1 oder 2, dadurch **gekennzeichnet**, daß das zylindrische Gehäuse (10) an seinen Enden durch zwei geformte Scheiben (11, 12) geschlossen ist.

4. Anzeiger nach Anspruch 1 oder 2, dadurch **gekennzeichnet**, daß die Winkelbewegung des Kontakts (20), der starr mit dem sich drehend bewegenden Element (17, 18, 19) verbunden ist, etwa 70° ist.
